Europäisches Patentamt

European Patent Office

Office européen des brevets

(11) Numéro de publication: **0 382 651**

**A1**

## (12) DEMANDE DE BREVET EUROPEEN

(21) Numéro de dépôt: **90420031.8**

(51) Int. Cl.5: **C08G 77/60, C04B 35/56**

(22) Date de dépôt: **19.01.90**

(30) Priorité: **23.01.89 FR 8900764**

(43) Date de publication de la demande:
**16.08.90 Bulletin 90/33**

(84) Etats contractants désignés:
**AT BE CH DE DK ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Noireaux, Patrick**
**7, rue d'Orléans**
**F-7200 Le Mans(FR)**
Inventeur: **Jamet, Jean**
**39, avenue de la Belle Etoile**
**F-33270 Bouliac(FR)**
Inventeur: **Parlier, Michel**
**46, rue Serpentine, Résidence Chataiseau**
**F-78960 Voisins-Le-Bretonneux(FR)**
Inventeur: **Bacos, Marie-Pierre**
**117, rue Houdan**
**F-92330 Sceaux(FR)**

(74) Mandataire: **Seugnet, Jean Louis et al**
**RHONE-POULENC CHIMIE Service Brevets**
**Chimie Centre de Recherches des Carrières**
**B.P. 62**
**F-69192 Saint-Fons Cédex(FR)**

(54) **Procédé de préparation de polysilanes.**

(57) Procédé de préparation de polysilanes liquides à température ambiante (20°C) par réaction d'au moins un silane monomère de formule :

$R^1R^2SiCl_2$ (1)

dans laquelle $R^1$ identique ou différent représente l'atome d'hydrogène ou un radical hydrocarboné, $R^2$ est le radical vinyle, avec au moins un monomère monochloré organique ou organosilicié, en présence de sodium fondu dans un solvant organique, procédé caractérisé en ce que :
- le rapport $r_1$ du nombre de moles de silane monomère de formule (1) sur le nombre de moles de monomère monochloré est compris entre 0,5 et 2,
- le solvant est composé essentiellement de toluène et de dioxanne,
- on sépare par filtration le mélange réactionnel refroidi en une phase liquide contenant le solvant et la fraction majoritaire de faible masse moléculaire de polysilane à l'état liquide et/ou dissous, et une phase solide contenant le sodium, le chlorure de sodium et le cas échéant la fraction de masse moléculaire élevée du polysilane, le polysilane liquide est récupéré à partir de la phase liquide et la phase solide est traitée pour oxyder le sodium résiduel.

EP 0 382 651 A1

EP 0 382 651 A1

## PROCEDE DE PREPARATION DE POLYSILANES

La présente invention concerne un procédé de préparation de polysilanes et, à titre d'application, l'utilisation de ces polysilanes obtenus pour la préparation de matériaux céramiques à base de carbure de silicium notamment sous forme de revêtements ou de matrices.

Le brevet EP-B-0 123 934 décrit un procédé de préparation de polysilanes comportant des groupes éthyléniques et des atomes d'hydrogène liés à des atomes de silicium, selon lequel des silanes monomères tels que $CH_3(CH_2=CH)SiCl_2$, $CH_3HSiCl_2$ et $(CH_3)_3SiCl$, réagissent avec de sodium fondu dans un solvant organique.

Selon ce brevet, la présence simultanée de groupes éthyléniques et d'atomes d'hydrogène liés à des atomes de silicium permet une réticulation du polymère par élévation de température pratiquement sans perte de masse, cette réticulation facilitant la transformation en carbure de silicium dans une phase ultérieure de traitement thermique.

Le procédé, selon le brevet EP-B-0 123 934, décrit également une étape d'oxydation du sodium avant la filtration du mélange réactionnel.

Cette étape rend le mélange réactionnel difficilement filtrable, il est donc nécessaire de filtrer plusieurs fois après décantation afin de pouvoir isoler le polymère.

De plus, le polymère obtenu selon le procédé du brevet EP-B-0 123 934 a un aspect laiteux provoqué par le lavage de celui-ci avant la filtration. Ce trouble semble être dû à la formation de microgels en suspension dans le polymère, ce qui présente des inconvénients tout autant sur le plan expérimental : certaines analyses du produit sont difficiles à effectuer (exemple : analyses par chromatographie par perméation de gel), que sur le plan des applications du produit, telles que l'imprégnation par ce polymère de fines cavités.

Un but de l'invention est précisément de proposer un procédé d'obtention de polysilanes liquides qui évite les inconvénients de mise en oeuvre indiquées ci-dessus.

Un autre but de l'invention est de fournir avec un rendement relativement élevé un polysilane réticulable, liquide à température ambiante, et d'une viscosité suffisamment faible pour permettre une bonne imprégnation d'un enchevêtrement de fibres de renforcement, en vue de réaliser une matrice renforcée par des fibres, utilisable telle quelle ou après transformation du polysilane en carbure de silicium par traitrement thermique.

Un autre but de l'invention est de fournir un tel polysilane utilisable également comme résine thermodurcissable pour réaliser par moulage des blocs ou pièces de forme non renforcés.

Ces buts, et d'autres, sont atteints par la présente invention qui concerne en effet un procédé de préparation de polysilanes liquides à température ambiante (20°C) par réaction d'au moins un silane monomère de formule :

$$R^1R^2SiCl_2 \quad (1)$$

dans laquelle $R^1$ identique ou différent représente l'atome d'hydrogène ou un radical hydrocarboné, $R^2$ est le radical vinyle, avec au moins un monomère monochloré organique ou organosilicié, en présence de sodium fondu dans un solvant organique, procédé caractérisé en ce que :
- le rapport $r_1$ du nombre de moles de silane monomère de formule (1) sur le nombre de moles de monomère monochloré est compris entre 0,5 et 2,
- le solvant est composé essentiellement de toluène et de dioxanne,
- on sépare par filtration le mélange réactionnel refroidi en une phase liquide contenant le solvant et la fraction majoritaire de faible masse moléculaire de polysilane à l'état liquide et/ou dissous, et une phase solide contenant le sodium, le chlorure de sodium et le cas échéant la fraction de masse moléculaire élevée du polysilane, le polysilane liquide est récupéré à partir de la phase liquide et la phase solide est traitée pour oxyder le sodium résiduel.

L'oxydation du sodium résiduel se fait par addition d'eau ou d'alcool qui rend le milieu basique. Dans un tel milieu, les polysilanes subissent des réactions secondaires qui augmentent leur masse moléculaire et qui les transforment partiellement en polysiloxanes.

La présente invention, grâce à la séparation préalable par filtration du polysilane liquide, permet d'éviter une augmentation de sa viscosité et la formation après traitement thermique de silice qui nuiraient aux propriétés de la matrice de carbure de silicium.

Et de manière avantageuse, on constate que, selon le procédé de l'invention, la filtration au préalable est de mise en oeuvre aisée : les deux phases se séparent très facilement.

Le choix du solvant, ainsi que la filtration préalable à l'oxydation de sodium résiduel permettent de réticuler le polysilane obtenu par le procédé à des températures comprises entre 50°C et 400°C avec une

2

très faible perte de masse ; et ceci de manière plus satisfaisante que dans le procédé selon le brevet EP-B-0 123 934. En effet, la teneur en matières volatiles au cours de cette réticulation est très faible par rapport aux autres procédés connus. L'indice de polydispersité, d'ailleurs, est beaucoup plus faible selon le procédé de la présente invention que selon celui du brevet EP-B-0 123 934.

De façon inattendue, la demanderesse a pu constater que le polymère obtenu selon le procédé de l'invention est de faible masse moléculaire, la présence du dioxane, en tant que solvant, favorise l'action du monomère monochloré en tant qu'agent bloqueur d'extrêmité de chaîne.

Bien que des métaux alcalins autres que le sodium, notamment le potassium, soient également utilisables pour obtenir des polysilanes par réaction avec des halogénosilanes, le sodium a été choisi parce qu'il n'attaque pratiquement pas les groupes vinyliques dans les conditions de la réaction. Le métal sodium est, de préférence, en léger excès molaire par rapport aux groupements chlorés afin que tous les atomes de chlore présents réagissent.

Bien entendu, il est possible de faire réagir d'autres chlorosilanes monomères avec ceux de formule (1) et avec les monomèrs monochlorés organiques ou organosiliciés. Ainsi, et selon un mode préféré de mise en oeuvre de l'invention, les chlorosilanes monomères de formule (1) et les monomères monochlorés réagissent avec au moins un chlorosilane monomère de formule générale :

$R^1HSiCl_2$     (2)

dans laquelle $R^1$ a la signification donnée auparavant.

Et selon un mode encore plus préféré de mise en oeuvre de l'invention le rapport $r_2$ du nombre de moles de chlorosilanes de formule (1) sur le nombre de moles de chlorosilanes monomères de formule (2) est compris entre 2 et 3,3 et le rapport $r_3$ du nombre de moles de monomère monochloré sur le nombre de moles de chlorosilanes monomères de formules (1) et (2) est compris entre 0,2 et 0,8 environ.

Les rapports molaires sont choisis de façon à obtenir dans la phase liquide, en fin de réaction, un polysilane de faible viscosité et pratiquement exempt de fraction volatile. La présence d'une telle fraction volatile dans le polymère lors du traitement thermique de transformation en carbure de silicium provoquerait un dégagement gazeux gênant, et son élimination préalable nécessiterait une opération supplémentaire et se traduirait par une perte du rendement global.

Le monomère monochloré organique est par exemple un chlorure de benzyle. Dans ce cas le rapport $r_3$ est avantageusement compris entre 0,2 et 0,6 environ.

Alternativement, le monomère monochloré peut être un organosilicé de formule :

$R^1{}_3SiCl$     (3)

dans laquelle $R^1$ a la signification donnée ci-dessus, le rapport $r_3$ étant alors de préférence compris entre 0,4 et 0,8.

Dans un mode de réalisation particulèrement avantageux, les proportions molaires des monomères de formules (1) et (2) et du monomère monochloré sont respectivement d'environ 0,76 : 0,24 : 0,4.

Le polysilane copolymère liquide obtenu selon le procédé de l'invention peut avoir une viscosité inférieure à 20 poises environ à temperérature ambiante et inférieure à 1 poise environ à 100°C. Cette faible viscosité à température ambiante permet au polysilane de remplir facilement une cavité dans un autoclave où il devra imprégner des fibres de renforcement, puis être réticulé et enfin transformé en carbure de silicium. La faible viscosité à 100°C permet au polysilane d'imprégner parfaitement les fibres avant que commence la réaction de réticulation.

Le polysilane copolymère liquide selon l'invention peut avantageusement être mélangé à un polysilane homopolymère de motif $-SiR^1H-$, $R^1$ ayant la signification donnée plus haut. Un tel homopolymère constitue un diluant réactif qui abaisse encore la viscosité du mélange et qui peut être co-réticulé avec le polysilane copolymère, sans perte de matière, par réaction de ses atomes d'hydrogène liés au silicium avec des groupes éthyléniques du copolymère.

Le polysilane homopolymère liquide peut être obtenu en faisant réagir un monomère de formule $R^1HSiCl_2$, le symbole $R^1$ ayant la signification indiquée plus haut, et un halogénure de benzyle avec du sodium fondu dans un solvant organique. L'utilisation d'un halogénure de benzyle, c'est-à-dire d'un monomère non silicié, comme agent d'extrémité de chaîne dans la préparation du polysilane copolymère et/ou dans celle du polysilane homopolymère, réduit la quantité de silicium dans le polymère et permet ainsi de moduler le rapport silicium/carbone dans le carbure de silicium final obtenu à partir du mélange de polysilanes.

Une répartition plus régulière de la masse moléculaire de l'homopolymère est obtenue en opérant en présence d'iodure de sodium.

D'autres caractéristiques et avantages de l'invention ressortirent de la description détaillée donnée ci-après de quelques modes de réalisation, et des dessins annexés dans lesquels :

- la figure 1 représente un appareillage pour la mise en oeuvre du procédé selon l'invention ;

3

- la figure 2 est un chromatogramme obtenu par chromatographie d'exclusion stérique et relatif à un polysilane homopolymère selon l'invention ; et

   - la figure 3 est un chromatogramme analogue à la figure 2, relatif au même produit, après élimination de la fraction volatile.

Dans les exemples qui suivent :

$\overline{M}n$ est la masse moléculaire moyenne en nombre,

$\overline{M}\omega$ est la masse moléculaire moyenne en poids,

I est l'indice de polydispersité :

$$\frac{\overline{M\omega}}{\overline{Mn}}$$

Vi est le radical vinyle

Me est le radical méthyle.

Ces valeurs sont obtenues à partir des analyses faites par chromatographie par perméation de gel (GPC : étalonnage polystyrène avec colonnes microstyragel).

Les pourcentages sont donnés en poids, sauf mentions contraires.

Exemple 1

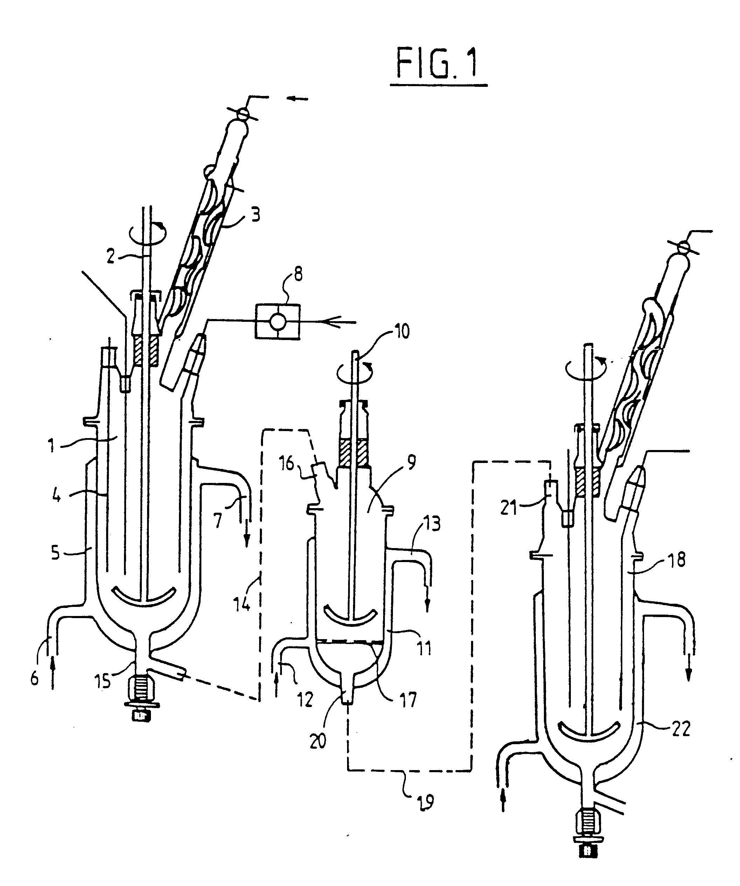

Cet exemple est relatif à la préparation du polysilane copolymère à l'aide de l'appareillage de la figure 1.

On introduit dans un réacteur 1 en verre pyrex, muni d'un agitateur rotatif 2 entraîné par un moteur non représenté, d'un réfrigérant de reflux 3 et d'une sonde thermique 4, sous atmosphère d'azote, un mélange de 75 % de toluène et de 25 % de dioxanne en poids, puis du sodium à raison d'un atome environ pour chaque atome de chlore contenu dans les monomères devant réagir. On chauffe le mélange à 105-110° C en faisant circuler de l'huile chaude dans une jaquette 5 entourant la paroi du réacteur et présentant un entrée 6 et une sortie 7 pour l'huile. Une agitation énergique au moyen de l'agitateur 2 permet une bonne dispersion du sodium fondu. On introduit alors, goutte à goutte, un mélange des trois monomères $CH_3$-$(CH_2 = CH)SiCl_2$, $CH_3HSiCl_2$ et $(CH_3)_3SiCl$, dans les proportions indiquées ci-après, au moyen d'une pompe doseuse 8. Pendant cette addition, la température de l'huile circulant dans la jaquette 5 est réduite à 80° C et la température du mélange réactionnel est maintenue au-dessus de 100° C en réglant le débit de la pompe 8, un complément d'apport de chaleur étant fourni par la réaction exothermique de polymérisation réductrice. Après la fin de l'addition, le milieu est maintenu au reflux pendant une durée de 1 à 2 heures.

Après refroidissement du mélange, on ajoute un volume de toluène équivalent au volume initial du solvant toluène-dioxanne. On transfère ensuite par gravité le mélange sous pression réduite dans un second réacteur en verre pyrex 9 muni comme le réacteur 1 d'un agitateur rotatif 10 et d'une jaquette de circulation de fluide 11 ayant une entrée 12 et une sortie 13. Le transfert se fait par une tubulure 14 communiquant avec une sortie inférieure 15 du réacteur 1 et débouchant dans une ouverture d'entrée 16 à la partie supérieure du réacteur 9. Du toluène à - 5° C circule éventuellement dans la jaquette 11. Un filtre 17 disposé horizontalement en travers du réacteur 9 recueille la fraction solide minoritaire du mélange, la solution étant à son tour transférée par dépression dans un troisième réacteur 18 semblable au réacteur 1, par l'intermédiaire d'une tubulure 19 communiquant avec une sortie inférieure 20 du réacteur 9 et débouchant dans une ouverture d'entrée supérieure 21 du réacteur 18. Du toluène à - 5° C circule éventuellement dans la jaquette 22.

Le polysilane en solution recueilli dans le réacteur 18 est soumis à deux ou trois lavages à l'eau et séché sur sulfate de sodium. Après filtration de la solution, les solvants sont évaporés sous pression réduite puis le polymère est séché durant 4 à 6 heures à 50° C sous une pression de 0,7 millibar environ.

Pour détruire le sodium résiduel, on ajoute d'abord du toluène dans le réacteur 9 pour remettre en suspension la phase solide retenue sur le filtre puis on ajoute lentement de l'éthanol à 95 % jusqu'à destruction complète du sodium. En ajoutant ensuite de l'eau pour dissoudre entièrement le chlorure de sodium et l'alcoolate de sodium, il ne reste dans la phase solide que des polysilanes de masse moléculaire relativement élevée et insoluble dans les solvants usuels, qu'on peut isoler pour déterminer leur quantité et évaluer le rendement global de la réaction de polymérisation.

Le tableau 1 donne les résultats, rendements et certaines caractéristiques du produit obtenu pour différentes valeurs des rapports $r_2$ et $r_3$.

Dans ce tableau, les rendements sont calculés en comparant à la masse théorique de polysilane correspondant à la réaction complète des monomères utilisés, d'une part la masse du polysilane liquide recueilli à partir du filtrat transféré dans le réacteur 18, d'autre part celle du polymère insoluble contenu dans le gâteau retenu sur le filtre 17.

Les valeurs données dans les colonnes "RMN $^1$H" représentent une estimation des teneurs en motifs $-CH_3HSi-$ et $-CH_3(CH_2=CH)Si$ calculées à partir des surfaces relatives des pics dus aux protons SiH et Si-$CH=CH_2$ en résonance magnétique nucléaire du proton.

Dans les colonnes "chromatographie" sont données les masses moléculaires moyennes calculées par chromatographie d'exclusion stérique (colonnes microstyragel $10^4$, $10^3$, 500 et 100 A, étalonnage polystyrène).

Dans certains cas, sont données des valeurs minimales et maximales correspondant à différents lots.

La perte de masse à température élevée du polysilane selon l'invention a également été déterminée. A 300°C, température à laquelle s'effectue la réticulation, on a observé une perte de masse ne dépassant pas 8 % pour des échantillons obtenus en choisissant $r_2 = 2$ et $r_3 = 0,4, 0,6$ ou $0,8$, et une perte de masse d'environ 2 % avec $r_2$ -3,3 et $r_3 = 0,4$ ou $0,6$. A titre de comparaison, on a obtenu des pertes de masse de 9 à 24 % pour des polysilanes obtenus selon le mode opératoire décrit ci-dessus, mais en remplaçant $CH_3HSiCl_2$ par $(CH_3)_2SiCl_2$, et des pertes de masse de 21 à 34 % en utilisant seulement $CH_3-(CH_2=CH)SiCl_2$ comme monomère bifonctionnel.

A 1000°C, température de transformation en carbure de silicium, la perte de masse du polysilane selon l'invention est de 32 à 40 % au lieu de 40 à 52 % pour le polysilane comportant des motifs $-Si(CH_3)_2-$.

Par ailleurs, on a mesuré, pour $r_2 = 3,3$ et $r_3 = 0,4$ ou $0,6$, une viscosité inférieure à 20 poises environ à température ambiante et inférieur à 1 poise environ à 100°C.

Tableau 1

| $r_2$ | $r_3$ | Rendement (%) | | RMN 1H | | Chromatographie | |
|---|---|---|---|---|---|---|---|
| | | liquide | insoluble | MeHSi (%) | MeViSi (%) | $\overline{M}\omega$ | $\overline{M}n$ |
| 2 | 0,4 | 65 | 12 | 15 | 34 | 7100 | 750 |
| | 0,6 | 62 | 8 | 12 | 29 | 2400 | 610 |
| | 0,8 | 50-56 | 7-8 | 12 | 21-27,5 | 2000-3700 | 580-680 |
| 3,16 | 0,4 | 64-70 | -- | 11-12 | 37-38 | 2800-3450 | 630-670 |
| 3,3 | 0,4 | 60-76 | 8,3 | 10-11 | 31-35 | 3080-4500 | 550-580 |
| | 0,5 | 71-73 | 14-17 | 7-12 | 28-31 | 2050-2350 | 540-560 |
| | 0,8 | 67 | 6 | 12 | 24 | 1860 | 475 |

## Exemple 2

On a opéré commme dans l'exemple 1, en utilisant comme monomère monofonctionnel le chlorure de benzyle au lieu du triméthylchlorosilane, le rapport volumique toluène/dioxanne pouvant être 75/25 ou 50/50.

Ce rapport est indiqué dans la colonne "solvant" du tableau 2. Les rendements sont calculés comme dans l'exemple 1.

Les valeurs indiquées dans les colonnes "fractionnement" sont obtenues en remettant en solution dans du toluène le polymère recueilli dans le réacteur 18 et en versant la solution obtenue dans de l'isopropanol. L1 représente la fraction de plus faible masse moléculaire, qui reste en solution dans le mélange toluène-isopropanol, et L2 la fraction de masse moléculaire plus élevée qui précipite.

Tableau 2

| R$_2$ | r$_3$ | Solvant | Rendement (%) | | Fractionnement | |
|---|---|---|---|---|---|---|
| | | | liquide | insoluble | L1 (%) | L2 (%) |
| 0,3 | 3,3 | 75/25 | 44 | 32 | 71 | 29 |
| 0,4 | 3,3 | 75/25 | 37-55 | 14-28,5 | -- | -- |
| | | | 44 | 32 | -- | -- |
| | | | | | 83 | 17 |
| 0,6 | 3,3 | 75/25 | 6,5 | 1 | 100 | -- |
| 0,2 | 3,3 | 50/50 | 45 | 30 | 60 | 40 |
| 0,3 | | | 59 | -- | -- | -- |
| 0,4 | 3,3 | 50/50 | 56-66 | -- | 71-75 | 25-29 |
| 0,2 | 2 | 50/50 | 54 | 38 | 55 | 45 |
| 0,3 | | | 73 | -- | 69 | 31 |
| 0,4 | | | 66 | -- | -- | -- |

Exemple 3

En utilisant l'appareillage de la figure 1 et le mode opératoire de l'exemple 1, on a fait réagir une mole de CH$_3$HSiCl$_2$ et 0,4 mole de chlorure de benzyle avec 2,4 moles de sodium en présence de 5 g d'iodure de sodium.

On a obtenu 130 g de polymère soluble, soit un rendement de 81 %.

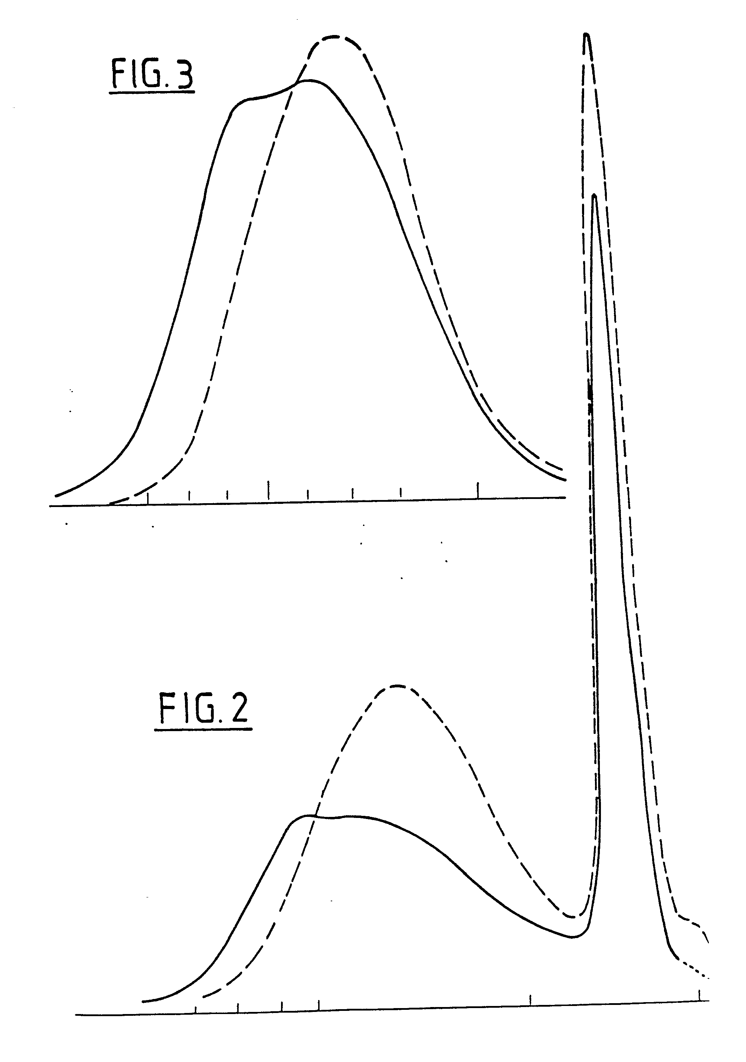

La courbe en trait interrompu de la figure 2 représente un chromatogramme de ce produit obtenu par chromatographie d'exclusion stérique dans les conditions indiquées ci-dessus à propos du tableau 1. Après distillation de la fraction volatile, on a obtenu, pour le résidu, le chromatogramme représenté en trait interrompu à la figure 3.

Exemple 4

On a opéré comme dans l'exemple 3, en supprimant l'iodure de sodium. On a obtenu, pour le produit résultant, avant et après distillation, les chromatogrammes représentés en trait continu aux figures 2 et 3.

On constate que la présence d'iodure de sodium conduit à une meilleure homogénéité des masses moléculaires.

Exemple 5

On opère comme dans l'exemple 3, le solvant étant un mélange équivolumique de toluène et de dioxanne. On obtient un rendement de 80 % en polymère soluble. On effectue des analyses par résonance magnétique nucléaire et chromatographie d'exclusion stérique sur le résidu obtenu après élimination de la fraction volatile par distillation à 100°C sous une pression de 1,3 10$^{-6}$ bar. Les pourcentages de groupements C$_6$H$_5$CH$_2$, CH$_3$HSi et CH$_3$Si calculés par résonance magnétique nucléaire sont respectivement 14, 61 et 25. Les masses moléculaires moyennes calculées par chromatographie d'exclusion stérique sont 840 pour la moyenne en masse et 430 pour la moyenne en nombre.

Le produit obtenu par réticulation à partir du polysilane copolymère selon l'invention ou du mélange de polysilanes copolymère et homopolymère présente le caractère thermodur et peut être utilisé directement, sans transformation ultérieure en carbure de silicium, en tant que matrice de matériaux composites ou pour d'autres applications telles que la réalisation par moulage de blocs ou pièces de forme non renforcés.

Exemple comparatif 6

On a opéré comme dans l'exemple 1, en utilisant comme monomères de départ : $MeViSiCl_2$, $Me_3SiCl$ et $Me_2SiCl_2$ en variant les solvants et les rapports des silanes monomères.

Ceci montre l'influence du solvant sur la dispersité des masses moléculaires. Le tableau 3 rassemble les résultats.

Tableau 3

| $r_A$ | $r_B$ | Solvant[1] | | Produit brut | | | Produit dévolatilisé | | |
|---|---|---|---|---|---|---|---|---|---|
| | | T.D | T.THF | $\overline{M}\omega$ | $\overline{M}n$ | I | $\overline{M}\omega$ | $\overline{M}n$ | I |
| 2 | 0,4 | + | | 4.600 | 700 | 6,6 | 8.000 | 860 | 9,2 |
| | | | + | 3.900 | 540 | 7,3 | 13.000 | 680 | 19 |
| 3,3 | 0,4 | + | | 3.800 | 700 | 5,4 | 5.300 | 800 | 6,5 |
| | | | + | 6.100 | 540 | 11,3 | 4.700 | 450 | 10,5 |

Le produit est dévolatilisé en le traitant à 60°C à une pression P = 0,133 Pa. Les produits obtenus après dévolatilisation demeurent fluides.

$r_A$ est le rapport du nombre de moles de $MeViSiCl_2$ sur le nombre de moles $Me_2SiCl_2$.

$r_B$ est le rapport du nombre de moles de $Me_3SiCl$ sur le nombre de moles de $MeViSiCl_2$ et de $Me_2SiCl_2$.

(1) solvant T.D : mélange de solvants : 75 % de toluène et 25 % de dioxanne.

solvant T.THF : mélange de solvants : 86 % de toluène et 14 % de tétrahydrofurane.

exemple comparatif 7

Synthèse de polysilanes à partir de monomères $Me_3SiCl$ et $MeViSiCl_2$ :

. soit selon le procédé du brevet EP-B-0 123 934 (même procédé que l'exemple 1 de ce brevet dans un mélange de xylène et de tétrahydrofurane) : procédé A,

. soit selon le procédé de la présente invention en opérant comme dans l'exemple 1 : procédé B.

Le tableau 4 rassemble les résultats :

7

| $r_1 = \dfrac{Me_3SiCl}{MeViSiCl_2}$ | Procédé | p.insoluble % | p.majoritaire % aspect | p.distillable % (matières volatiles) | $Me_nSi-[MeViSi]_n-Me_3$ n = 2 | n = 3 |
|---|---|---|---|---|---|---|
| 0,67 | A | 4,5 | 41 thermoplastique | 24 | - | - |
| | B | 12 | 53 liquide | 22 | 60 % | 40 % |
| 1 | A | -- | 30 thermoplastique | 25 | 24 % | 70 % |
| | B | < 3 | 53 liquide | 22 | 70 % | 30 % |
| 1,4 | A | 3,6 | 47 thermoplastique | 25,8 | - | - |
| | B | 3 | 45 liquide | 15 | 70 % | 30 % |

## Tableau 4

$r_1$ a la signification donnée auparavant.

Les matières volatiles sont distillées du produit brut à une température de 60°C à une pression P = 0,133Pa.

EP 0 382 651 A1

Exemple comparatif 8

Synthèse de polysilanes à partir de monomères : $Me_3SiCl$, $MeViSiCl_2$ et $MeHSiCl_2$ avec $r_2 = 3,3$ et $r_3 = 0,4$ :
. soit selon le procédé de la présente invention : référence 1,
. soit selon le procédé du brevet EP-B-0 123 934 avec comme solvant le mélange de 75 % de toluène et de 25 % de dioxanne : référence 2,
. soit selon le procédé du brevet EP-B-0 123 934 avec comme solvant le mélange de 86 % de xylène et de 14 % de tétrahydrofurane : référence 3.
Les résultats sont rassemblés dans le tableau 5 :

Tableau 5

| Réf. | Procédé opératoire | | | Produit brut | | | Produit dévolatilisé | | | Matières volatiles % |
|---|---|---|---|---|---|---|---|---|---|---|
| | Solvant | Filtration | eau/THF + (HCl) | Aspect | GPC | | Aspect | GPC | | |
| | | | | | $\overline{M}\omega$ | $\overline{M}n$ | | $\overline{M}\omega$ | $\overline{M}n$ | |
| 1 | T.D | + | -- | liquide ambré | 3.080 4.500 | 550 580 | p.visqueux ambré | 3.600 | 700 | 10 |
| | | | | | I = 5,6-7,7 | | | I = 5-6 | | |
| 2 | T.D | -- | + | liquide ambré visqueux | 24.700 I = 27 | 920 | solide ambré | -- | -- | 10 |
| 3 | T.THF | -- | + | p.hétérogène laiteux visqueux | 13.800 24.000 I = 19-34 | 710 700 | non coulable laiteux | 30.000 I = 30 | 1.100 | 20 |
| le produit dévolatilisé est obtenu à partir du produit brut par distillation des matières volatiles à une température comprise entre 100 et 120°C à une pression P = 0,133Pa. | | | | | | | | | | |

## Revendications

1. Procédé de préparation de polysilanes liquides à température ambiante (20°C) par réaction d'au moins un silane monomère de formule :

$R^1R^2SiCl_2$     (1)

dans laquelle $R^1$ identique ou différent représente l'atome d'hydrogène ou un radical hydrocarboné, $R^2$ est le radical vinyle, avec au moins un monomère monochloré organique ou organosilicié, en présence de sodium fondu dans un solvant organique, procédé caractérisé en ce que :
- le rapport $r_1$ du nombre de moles de silane monomère de formule (1) sur le nombre de moles de monomère monochloré est compris entre 0,5 et 2,
- le solvant est composé essentiellement de toluène et de dioxanne,
- on sépare par filtration le mélange réactionnel refroidi en une phase liquide contenant le solvant et la fraction majoritaire de faible masse moléculaire de polysilane à l'état liquide et/ou dissous, et une phase solide contenant le sodium, le chlorure de sodium et le cas échéant la fraction de masse moléculaire élevée du polysilane, le polysilane liquide est récupéré à partir de la phase liquide et la phase solide est traitée pour oxyder le sodium résiduel.

2. Procédé selon la revendication 1 caractérisé en ce que le chlorosilane monomère de formule (1) et le monomère monochloré réagissent avec au moins un chlorosilane de formule (2) : $R^1HSiCl_2$, dans laquelle $R^1$ identique ou différent représente l'atome d'hydrogène ou un radical hydrocarboné.

3. Procédé selon la revendication 2 caractérisé en ce que le rapport $r_2$ du nombre de moles de chlorosilanes de formule (1) sur le nombre de moles de chlorosilanes monomères de formule (2) est compris entre 2 et 3,3 et le rapport $r_3$ du nombre de moles de monomère monochloré sur le nombre de moles de chlorosilanes monomères de formules (1) et (2) est compris entre 0,2 et 0,8 environ.

4. Procédé selon l'une quelconque des revendications précédentes caractérisé en ce que le monomère monochloré est le chlorure de benzyle et en ce que le rapport $r_3$ est de préférence compris entre 0,2 et 0,6.

5. Procédé selon l'une quelconque des revendications précédentes caractérisé en ce que le monomère monochloré est de formule :

$R^{'}_3SiCl$   (3)

dans laquelle $R^1$ identique ou différent représente l'atome d'hydrogène ou un radical hydrocarboné et en ce que le rapport $r_3$ est compris de préférence entre 0,4 et 0,8.

6. Procédé selon l'une quelconque des revendications 2 à 5 caractérisé en ce que les proportions molaires des monomères de formules (1) et (2) et du monomère monochloré sont respectivement d'environ 0,76 : 0,24 : 0,4.

7. Procédé selon l'une quelconque des revendications précédentes caractérisé en ce que le polysilane copolymère obtenu par le procédé de l'une quelconque des revendications précédentes est mélangé à un polysilane homopolymère de motif $-SiR^1H-$, dans lequel $R^1$ identique ou différent représente un atome d'hydrogène ou un radical hydrocarboné.

8. Procédé selon la revendication 7, caractérisé en ce que l'homopolymère est obtenue par réaction d'un monomère de formule $R^1HSiCl_2$, dans laquelle $R^1$ représente l'atome d'hydrogène ou un radical hydrocarboné et du chlorure de benzyle avec du sodium fondu dans un solvant organique.

9. Procédé selon la revendication 8, caractérisé en ce que l'homopolymère est obtenu en opérant en présence d'iodure de sodium.

10. Procédé selon l'une quelconque des revendications précédentes caractérisé en ce que le polysilane récupéré de la phase liquide est ultérieurement traité thermiquement entre 50 et 400°C.

11. Utilisation du polysilane obtenu par le procédé de l'une quelconque des revendications précédentes pour la préparation de matériaux céramiques à base de carbure de silicium notamment sous forme de revêtements ou de matrices.

## FIG.1

FIG.3

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 123 934 (UNION CARBIDE)<br>* Revendications 1,3,10,12; page 9, lignes 23-32; page 10, lignes 1-7; page 11, lignes 21-32; page 12, lignes 1-18; page 21, exemple 6; page 25, exemple 12; page 27, exemple 15 *<br>--- | 1-6 | C 08 G 77/60<br>C 04 B 35/56 |
| X | EP-A-0 052 694 (UNION CARBIDE)<br>* Revendications 1,9,10; page 10, lignes 4-13; exemple 5, page 21; exemple 8, page 8 *<br>--- | 1-6 | |
| A | US-A-3 431 221 (E. HOESS)<br>* Revendications 1,2,4 *<br>----- | 1 | |

| | | | DOMAINES TECHNIQUES RECHERCHES (Int. Cl.5) |
|---|---|---|---|
| | | | C 08 B<br>C 04 B<br>C 08 L |

Le présent rapport a été établi pour toutes les revendications

| Lieu de la recherche | Date d'achèvement de la recherche | Examinateur |
|---|---|---|
| LA HAYE | 31-05-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 ............................................................................................................

& : membre de la même famille, document correspondant